# EUROPEAN PATENT SPECIFICATION

(11) **EP 2 395 223 B1**
(45) Date of publication and mention of the grant of the patent: **27.06.2012**
(21) Application number: 10738377.0
(22) Date of filing: 05.02.2010
(51) Int. Cl.: F02M 25/07, F02D 41/00, F01N 3/08, F01N 3/20, F02B 39/16, F02B 37/00

(54) **INTERNAL COMBUSTION ENGINE EXHAUST PURIFYING DEVICE AND EXHAUST PURIFYING METHOD**
VORRICHTUNG UND VERFAHREN ZUR ABGASREINIGUNG BEI EINEM VERBRENNUNGSMOTOR
DISPOSITIF DE PURIFICATION D'ÉCHAPPEMENT DE MOTEUR À COMBUSTION INTERNE ET PROCÉDÉ DE PURIFICATION D'ÉCHAPPEMENT

(30) Priority: 06.02.2009 JP 2009025997
(43) Date of publication of application: 14.12.2011
(73) Proprietor: Honda Motor Co., Ltd., Minato-ku Tokyo 107-8556 (JP)
(72) Inventor: WADA, Katsuji, Wako-shi Saitama 351-0193 (JP); IWADARE, Mitsuhiro, Wako-shi Saitama 351-0193 (JP)
(74) Representative: Feller, Frank
(86) International application number: PCT/JP2010/000702
(87) International publication number: WO 2010/090036

(56) References cited:
- JP-A- 2001 140 703
- JP-A- 2004 150 319
- JP-A- 2005 127 247
- JP-A- 2007 154 675
- JP-A- 2007 162 545
- JP-A- 2008 063 976
- JP-A- 2008 261 271
- JP-A- 2009 209 887

## Description

### TECHNICAL FIELD

The present invention relates to an internal combustion engine exhaust purifying device and an exhaust purifying method. In particular, it relates to an exhaust purifying device equipped with a NOx purification catalyst that traps NOx contained in the exhaust emitted from the internal combustion engine when lean, and reduces the NOx thus trapped when rich.

It should be noted that, in the present invention, the terminology "rich" indicates a ratio of air/fuel (hereinafter referred to as "air/fuel ratio" or "A/F") of fuel that is smaller than a stoichiometric air/fuel ratio, and the terminology "lean" indicates an air/fuel ratio of fuel that is larger than the above stoichiometric air/fuel ratio. In addition, in the following explanation, a weight ratio of air and fuel in a mixed gas flowing into the internal combustion engine (hereinafter referred to as "engine") is defined as the engine air/fuel ratio, and a weight ratio of air and fuel inside an exhaust path is defined as the exhaust air/fuel ratio.

### BACKGROUND ART

Technology has been known in which a NOx purification catalyst called a three-way catalyst (hereinafter referred to as TWC), NOx occlusion/reduction catalyst (hereinafter referred to as LNT) or NOx adsorption/reduction catalyst (hereinafter referred to as LNC) is installed in the exhaust path of an engine, and switching control of the exhaust A/F to rich or lean is intermittently performed. The NOx purification catalyst purifies NOx in the exhaust gas by trapping the NOx in the exhaust gas when lean and reducing the NOx thus trapped when rich.

Methods of controlling the exhaust A/F to rich that can be exemplified are a method of controlling the exhaust A/F by adjusting the fuel injection (hereinafter referred to as main injection) amount contributing to torque (hereinafter referred to s rich combustion) after causing the intake air amount to decrease by closing the throttle valve or the like, and a method of causing uncombusted fuel to flow into the exhaust path to control the exhaust A/F to rich, by injecting additional fuel not contributing to torque (hereinafter referred to as post injection) into the cylinders by way of fuel injectors close to when each cylinder of the engine is transitioning to the exhaust stroke from the power stroke (hereinafter referred to as post rich).

In addition, technology has been known whereby a portion of the exhaust gas of the engine is returned to the intake, and the combustion temperature in the cylinders is made to decrease by mixing new air and exhaust gas, whereby the NOx emitted from the engine is decreased (hereinafter referred to as EGR). According to this EGR technology, the exhaust A/F can be controlled to rich by causing the intake air amount to decrease by increasing the exhaust gas amount being recirculated (hereinafter referred to as EGR amount), whereby NOx emissions can be decreased.

Studies with the objective of reducing NOx emissions further have progressed by combining control technology for exhaust A/F using the above-mentioned NOx purification catalyst and EGR technology. For example, an exhaust purifying device has been proposed that includes an EGR device executing switching between recirculation of exhaust gas from an upstream side of a NOx purification catalyst and recirculation of exhaust gas from a downstream side of the NOx purification catalyst (refer to Patent Document 1). With this exhaust purifying device, control is executed such that the exhaust gas from the upstream side of the NOx purification catalyst is made to recirculate during low engine load, and the exhaust gas from the downstream side of the NOx purification catalyst is made to recirculate during high engine load.

In addition, studies have progressed into applying control technology for exhaust A/F using the above-mentioned NOx purification catalyst and EGR technology to an engine that implements forced induction by way of a turbocharger. For example, in engines implementing forced induction by way of a turbocharger, both high-pressure EGR (hereinafter referred to as HP-EGR) introduction in which a portion of the exhaust gas is taken from upstream of the turbine and returned to the intake path, and low-pressure EGR (hereinafter referred to as LP-EGR) in which a portion of the exhaust gas is taken from downstream of the turbine and returned to the intake path are known (refer to Patent Documents 2 to 4). Switching between an HP-EGR path and LP-EGR path is executed according to operating states such as of the engine revolution speed and engine load.
Patent Document 1: Japanese Patent No. 2675405
Patent Document 2: Japanese Unexamined Patent Application Publication No. 2001-140703
Patent Document 3: Japanese Unexamined Patent Application Publication No. 2004-150319
Patent Document 4: Japanese Unexamined Patent Application Publication No. 2005-127247

### DISCLOSURE OF THE INVENTION

### Problems to be Solved by the Invention

With the above-mentioned HP-EGR, the exhaust gas flowing in the EGR path is relatively high temperature; therefore, malfunctions from hydrocarbons (hereinafter referred to as HC) adhering inside the EGR path do not easily occur; however, there is a problem in that the amount of exhaust flowing into the turbine when the EGR amount is increased decreases, and the charge efficient declines. In contrast, LP-EGR can realize a high charge efficiency and can recirculate a large amount of exhaust gas; however, since the exhaust gas flowing in the EGR path is relative low temperature, it is easy for HC and the like to adhere inside the EGR path, and lower temperature exhaust gas is recirculated and supplied for combustion, a result of which there is a problem in that the temperature of the exhaust gas emitted from the engine declines, and thus the activity of the downstream NOx purification catalyst declines. As a result, depending on the operating state such as the revolution speed and load of the engine, a scheme has been necessary such as executing switching to the HP-EGR path in a low load region in which the exhaust temperature declines, and executing switching to the LP-EGR path in a mid-to-high load region in which the exhaust temperature is high.

Incidentally, in a case of setting the exhaust A/F to rich by rich combustion, all of the injected fuel contributes to torque. As a result, in order to set the exhaust A/F to rich with the torque remaining equal to when lean, it is necessary to reduce the intake air amount more than when lean.

In addition, in a case of setting the exhaust A/F to rich by way of post rich, when the post injection amount is increased, along with deterioration in the fuel economy occurring, a portion of the post injected fuel mixes with the engine oil, and so-called oil dilution occurs. As a result, similarly to rich combustion, it is necessary to reduce the intake air amount more than when lean also in a case of setting the exhaust A/F to rich by post rich.

So-called throttling and the like to narrow the throttle valve provided in the intake path can be exemplified as a method for decreasing the intake air amount. However, when the intake air amount is decreased by throttling or the like during HP-EGR introduction, a large difference arises between the pressure inside the intake path further upstream than the compressor and the pressure inside the intake path further downstream than the compressor, and surging may occur in the turbocharger.

The present invention has been made taking the above-mentioned issues into account, and an object thereof is to prevent surging of the turbocharger from occurring following the enrichment of the exhaust A/F.

### Means for Solving the Problems

In order to achieve the above-mentioned object, according to the invention, it is provided an exhaust purifying device for an internal combustion engine (1) equipped with a turbocharger (8) that drives a compressor (82) provided in an intake path (2, 3) of the internal combustion engine by way of rotation of a turbine (81) provided in an exhaust path (4) of the internal combustion engine, the device includes: a first EGR path (6) that recirculates a portion of exhaust gas upstream of the turbine into the intake path; a first EGR control means (11, 43) for controlling a flow rate of exhaust gas being recirculated through the first EGR path; a second EGR path (10) that recirculates a portion of exhaust gas downstream of the turbine into the intake path; a second EGR control means (12, 44) for controlling a flow rate of exhaust gas being recirculated through the second EGR path; a NOx purification catalyst (31) that is provided inside of the exhaust path, traps NOx under an oxidizing atmosphere, and purifies NOx under a reducing atmosphere; a reduction control means (41) for executing reduction control to make exhaust gas flowing into the NOx purification catalyst into a reducing atmosphere at a predetermined time; a prediction means (40) for predicting occurrence of surging in the turbocharger; and an EGR switching means (45) for selecting recirculation control of exhaust gas by way of the first EGR control means in a case of surging not occurring in the turbocharger being predicted by the prediction means, and selecting recirculation control of exhaust gas by way of the second EGR control means in a case of surging occurring in the turbocharger being predicted by the prediction means, during execution of the reduction control.

According to a preferred embodiment of the invention, the exhaust purifying device further includes: an intake air amount detection means (21) for detecting an intake air amount of the internal combustion engine; an upstream-side pressure detection means (23) for detecting pressure inside the intake path further upstream than the compressor; and a downstream-side pressure detection means (24) for detecting pressure inside the intake path further downstream than the compressor, in which the prediction means predicts an occurrence of surging in the turbocharger based on the intake air amount detected by the intake air amount detection means, and a ratio of upstream-side pressure detected by the upstream-side pressure detection means to downstream-side pressure detected by the downstream-side pressure detection means.

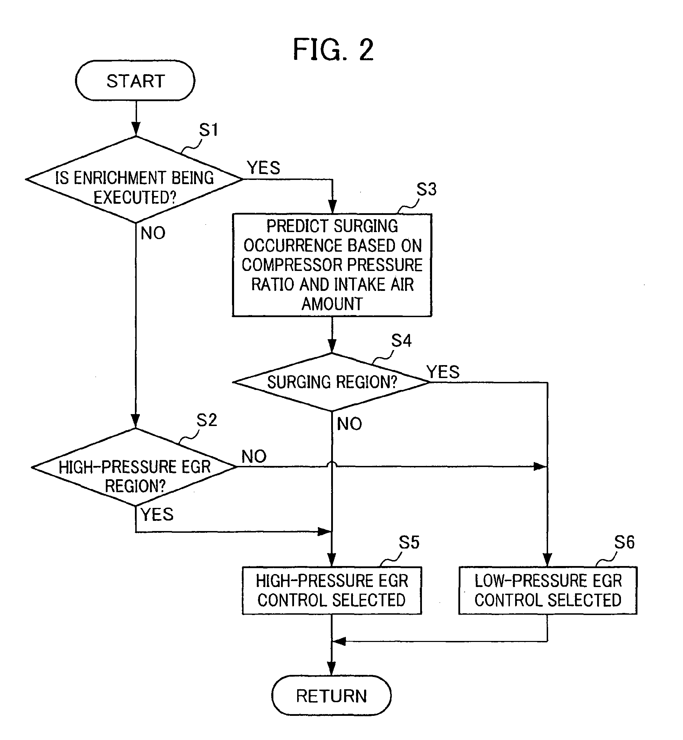

The invention also provides an exhaust purifying method for an internal combustion engine (1) including: a turbocharger (8) that drives a compressor (82) provided in an intake path (2, 3) of the internal combustion engine by way of rotation of a turbine (81) provided in an exhaust path (4) of the internal combustion engine; a first EGR path (6) that recirculates a portion of exhaust gas upstream of the turbine into the intake path; a first EGR control means (11, 43) for controlling a flow rate of exhaust gas being recirculated through the first EGR path; a second EGR path (10) that recirculates a portion of exhaust gas downstream of the turbine into the intake path; a second EGR control means (12, 44) for controlling a flow rate of exhaust gas being recirculated through the second EGR path; and a NOx purification catalyst (31) that is provided inside of the exhaust path, traps NOx under an oxidizing atmosphere, and purifies NOx under a reducing atmosphere, the method includes: a reduction control step (processing of Step S1 in FIG. 2) of executing reduction control to make exhaust gas flowing into the NOx purification catalyst into a reducing atmosphere at a predetermined timing; a prediction step (processing of Step S3 in FIG. 2) of predicting occurrence of surging in the turbocharger; and an EGR switching step (processing of Step S4 to S6 in FIG. 2) of, during execution of the reduction control, selecting recirculation control of exhaust gas by way of the first EGR control means in a case of surging not occurring in the turbocharger being predicted in the prediction step, and selecting recirculation control of exhaust gas by way of the second EGR control means in a case of surging occurring in the turbocharger being predicted in the prediction step.

### Effects of the Invention

According to the invention, during reduction control execution to control the exhaust gas flowing into the NOx purification catalyst to a reducing atmosphere (i.e. enriching the exhaust air/fuel ratio), switching between recirculation control of the exhaust gas by way of the first EGR control means corresponding to HP-EGR and recirculation control of the exhaust gas by way of the second EGR control means corresponding to LP-EGR is executed based on the surging occurrence prediction results for the turbocharger. More specifically, during reduction control execution, recirculation control of the exhaust gas by way of the second EGR control means is selected in a case of surging occurring in the turbocharger being predicted, and recirculation control of the exhaust gas by way of the first EGR control means is selected in a case of surging not occurring in the turbocharger being predicted.

As explained above, upon executing reduction control for NOx purification, even in a case of using either method among rich combustion and post rich, a decrease in the intake air amount by way of throttling or the like is required.

In addition, if recirculation control of the exhaust gas by way of the first EGR control means corresponding to HP-EGR is selected during reduction control execution accompanying throttling and the like, a large difference will arise between the pressure inside the intake path further upstream than the compressor and the pressure inside the intake path further downstream than the compressor, and surging will occur in the turbocharger. In this regard, according to the present invention, the occurrence of surging in the turbocharger can be avoided during execution of reduction control by selecting recirculation control of the exhaust gas by way of the second EGR control means in a case of the occurrence of surging being predicted. In addition, since the exhaust gas flowing inside the EGR path is relatively low temperature in the second EGR corresponding to LP-EGR, there has been a problem in that HC tends to adhere inside the EGR path; however, according to the present invention, since recirculation control of the exhaust gas by way of the second EGR control means is selected limiting to a case in which the occurrence of surging is predicted, the adherence of HC inside of the second EGR path can be suppressed.

Furthermore, as a result of lower temperature exhaust gas being recirculated in the second EGR corresponding to LP-EGR and being supplied for combustion, there has been a problem in that the temperature of the exhaust gas emitted from the engine declines, and thus the activity of the downstream NOx purification catalyst declines; however, according to the present invention, since recirculation control of the exhaust gas by way of the second EGR control means is selected limiting to a case of the occurrence of surging being predicted, a decline in the NOx purification catalyst activity due to a decline in the exhaust temperature can be suppressed.

According to the preferred embodiment of the invention, the occurrence of surging is predicted based on the intake air amount and a ratio of an intake path internal pressure further upstream than the compressor (hereinafter referred to as compressor upstream pressure) to an intake path internal pressure further downstream than the compressor (hereinafter referred to as compressor downstream pressure), i.e. compressor upstream pressure/compressor downstream pressure (hereinafter referred to as compressor pressure ratio).

The cause of surging is a large pressure differential arising between the compressor upstream pressure and the compressor downstream pressure under conditions of at least a predetermined intake air amount; however, according to the present invention, since surging is predicted based on this intake air amount and compressor pressure ratio, surging can be predicted more accurately.

As a result, according to the present invention, recirculation control of the exhaust gas by way of the second EGR control means can be selected at a more appropriate timing during the execution of reduction control, and thus the occurrence of surging in the turbocharger can be more reliably avoided. In addition, the adherence of HC in the second EGR path can be further suppressed, and a decline in the NOx purification catalyst activity due to a decline in the exhaust temperature can be further suppressed.

According to the third aspect of the invention, effects similar to the first aspect of the invention are exerted.

### BRIEF DESCRIPTION OF THE DRAWINGS

FIG. 1 is a view showing configurations of an internal combustion engine and a purifying device thereof according to an embodiment of the present invention;
FIG. 2 is a flowchart showing a sequence of EGR switch processing by an ECU according to an embodiment of the present invention;
FIG. 3 is a graph showing an EGR region determination map; and
FIG. 4 is a graph showing a surging region determination map.

### EXPLANATION OF REFERENCE NUMERALS

1 Engine (internal combustion engine)
2 Intake plumbing (intake path)
3 Intake manifold (intake path)
4 Exhaust plumbing (exhaust path)
5 Exhaust manifold (exhaust path)
6 High-pressure EGR path (first EGR path)
11 High-pressure EGR valve (first EGR control means)
10 Low-pressure EGR path (second EGR path)
12 Low-pressure EGR valve (second EGR control means)
8 Turbocharger
81 Turbine
82 Compressor
9 Throttle valve
21 Air-flow meter (intake air volume detection means)
22 UEGO sensor
23 Upstream pressure sensor (upstream-side pressure detection means)
24 Downstream pressure sensor (downstream-side pressure detection means)
31 NOx purification catalyst
40 ECU (reduction control means, first EGR control means, second EGR control means, EGR switching means, prediction means)

### PREFERRED MODE FOR CARRYING OUT THE INVENTION

An embodiment of the present invention will be explained in detail hereinafter while referring to the drawings.

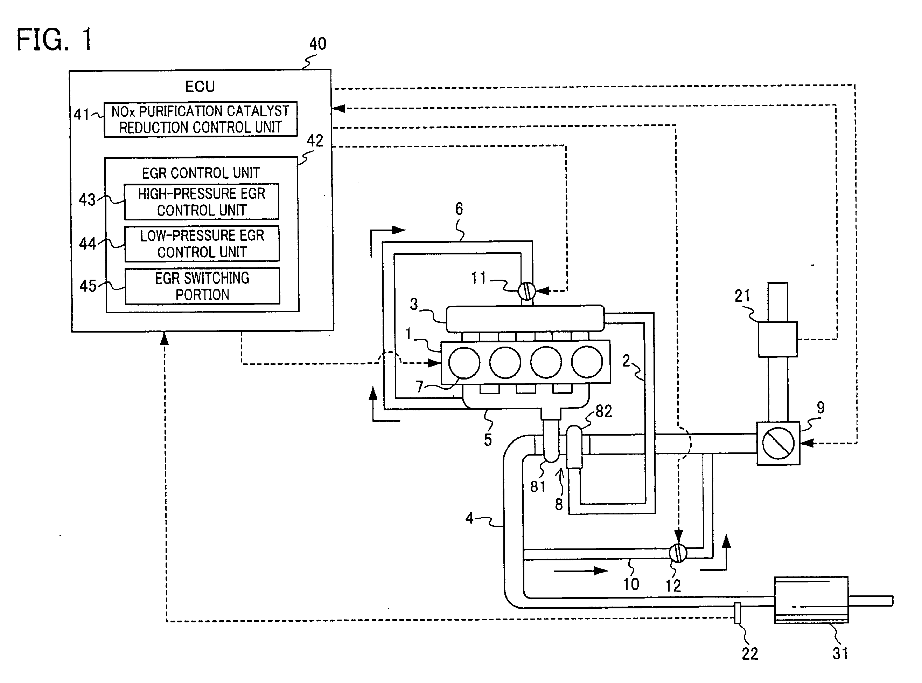

FIG. 1 is a view showing configurations of an internal combustion engine and an emission control device thereof according to an embodiment of the present invention. An internal combustion engine (hereinafter referred to as "engine") 1 is a diesel engine that directly injects fuel into the combustion chamber of each cylinder 7, and a fuel injector, which is not illustrated, is provided to each of the cylinders 7. These fuel injectors are electrically connected by an electronic control unit (hereinafter referred to as "ECU") 40, and the valve-open duration and the valve-close duration of the fuel injectors are controlled by the ECU 40.

The engine 1 is provided with intake plumbing 2 in which intake air flows, exhaust plumbing 4 in which exhaust gas flows, a turbocharger 8 that compresses and feeds intake air to the intake plumbing 2, a high-pressure EGR path 6 that recirculates a portion of the exhaust upstream of the turbine 81 of the turbocharger 8 into the intake manifold 3, and a low-pressure EGR path 10 that recirculates a portion of the exhaust downstream of the turbine 81 of the turbocharger 8 into the intake plumbing 2 at an upstream side of the turbocharger 8.

The intake plumbing 2 is connected to the intake port of each cylinder 7 of the engine 1 via a plurality of branches of an intake manifold 3. The exhaust plumbing 4 is connected to the exhaust port of each cylinder 7 of the engine 1 via a plurality of branches of an exhaust manifold 5. The high-pressure EGR path 6 branches from the exhaust manifold 5 and leads to the intake manifold 3.

The turbocharger 8 includes a turbine 81 provided to the exhaust plumbing 4 and a compressor 82 provided to the intake plumbing 2. The turbine 81 is driven by the kinetic energy of exhaust gas flowing in the exhaust plumbing 4. The compressor 82 is rotationally driven by the turbine 81, and compresses and feeds intake air into the intake plumbing 2. In addition, the turbine 81 is provided with a plurality of variable vanes, which are not illustrated, and is configured so that the turbine revolution number (revolution speed) can vary by way of causing the aperture of the variable vanes to change. The vane aperture of the turbine 81 is electromagnetically controlled by the ECU 40.

A throttle valve 9 that controls the intake air amount of the engine 1 is provided inside the intake plumbing 2 at an upstream side of the turbocharger 8. This throttle valve 9 is connected to the ECU 40 via an actuator, and the aperture thereof is electromagnetically controlled by the ECU 40. The intake air amount controlled by the throttle valve 9 is detected by an air flow meter 21.

An upstream pressure sensor 23 that detects a compressor upstream pressure is provided in the intake plumbing 2 on an upstream side of the compressor 82 and on a downstream side of the throttle valve 9. In addition, a downstream pressure sensor 24 that detects the compressor downstream pressure is provided in the intake plumbing 2 on a downstream side of the compressor 82. This upstream pressure sensor 23 and downstream pressure sensor 24 are connected to an ECU 40 described later.

The high-pressure EGR path 6 connects the exhaust manifold 5 and the intake manifold 3, and recirculates a portion of the exhaust emitted from the engine 1. A high-pressure EGR valve 11 that controls the flow rate of exhaust gas being recirculated is provided in the high-pressure EGR path 6. The high-pressure EGR valve 11 is connected to the ECU 40 via an actuator, which is not illustrated, and the valve aperture thereof is electromagnetically controlled by the ECU 40.

The low-pressure EGR path 10 connects the exhaust plumbing 4 and the intake plumbing 2, and recirculates a portion of the exhaust from a downstream side of the turbocharger 8 in the exhaust plumbing 4 to an upstream side of the turbocharger 8 in the intake plumbing 2. A low-pressure EGR valve 12 that controls the flow rate of exhaust gas being recirculated is provided in the low-pressure EGR path 10. The low-pressure EGR valve 12 is connected to the ECU 40 via an actuator, which is not illustrated, and the valve aperture thereof is electromagnetically controlled by the ECU 40.

A NOx purification catalyst 31 that purifies exhaust gas is provided inside the exhaust plumbing 4 at a downstream side of the turbocharger 8. The NOx purification catalyst 31 has the ability to trap NOx. Purification of NOx in the NOx purification catalyst 31 will be explained hereinafter.

First, when so-called lean burn operation is performed in the engine air/fuel ratio is leaner than the stoichiometric air/fuel ratio, the exhaust flowing into the NOx purification catalyst 31 becomes an oxidizing atmosphere. As a result thereof, NOx in the exhaust gas is trapped in the NOx purification catalyst 31.

Next, when rich operation is performed in which the engine air/fuel ratio becomes richer than the stoichiometric air/fuel ratio, the exhaust gas becomes a reducing atmosphere. As a result thereof, the NOx trapped in the NOx purification catalyst 31 is reduced and purified.

A crank angle position sensor (not illustrated) that detects the rotational angle of the crankshaft of the engine 1, an accelerator sensor (not illustrated) that detects a depression amount of the accelerator pedal of a vehicle being driven by the engine 1, the air-flow meter 21 that detects an intake air amount (air amount newly aspirated into the engine 1 per unit time) of the engine 1, the upstream pressure sensor 23 that detects the compressor upstream pressure, the downstream pressure sensor 24 that detects the compressor downstream pressure, an exhaust temperature sensor (not illustrated) that detects an exhaust temperature of exhaust flowing into the NOx purification catalyst 31, and a UEGO sensor (universal exhaust gas oxygen sensor) 22 that detects an oxygen concentration of the exhaust flowing into the NOx purification catalyst 31, i.e. exhaust air/fuel ratio, are connected to the ECU 40, and the detection signals of these sensors are supplied to the ECU 40.

Herein, the revolution speed of the engine 1 is calculated by the ECU 40 based on the output of the crank angle position sensor. A generated torque of the engine 1, i.e. load of the engine 1, is calculated by the ECU 40 based on the fuel injection amount of the engine 1. In addition, this fuel injection amount is calculated by the ECU 40 based on the output of the accelerator sensor.

The ECU 40 includes an input circuit that has functions such as of shaping input signal wave forms from every kind of sensor, correcting the voltage levels to predetermined levels, and converting analog signal values to digital signal values, and a central processing unit (hereinafter referred to as "CPU"). In addition to this, the ECU 40 includes a storage circuit that stores every kind of calculation program executed by the CPU and calculation results, and an output circuit that outputs control signals to the throttle valve 9, high-pressure EGR valve 11, low-pressure EGR valve 12, turbocharger 8, fuel injectors of the engine 1, and the like.

According to the above such hardware configuration, the modules of a NOx purification catalyst reduction control unit 41 and an EGR control unit 42 are configured in the ECU 40. The functions of each module will be explained hereinafter.

The NOx purification catalyst reduction control unit 41 executes reduction control to make the exhaust gas flowing into the NOx purification catalyst 31 into a reducing atmosphere at a predetermined time. More specifically, it estimates the NOx trapped amount that is trapped in the NOx purification catalyst 31 based on the intake air amount, fuel injection amount and the like, and in a case of the NOx trapped amount thus estimated being at least a predetermined judgment value, executes reduction control.

In the reduction control, an exhaust air/fuel ratio target value of the exhaust gas flowing into the NOx purification catalyst 31 is determined based on at least one among the exhaust gas temperature, the NOx trapped amount estimated as described above, the time executing reduction control, the revolution speed of the engine 1, and the generated torque of the engine 1. At least one among the intake air amount of the engine 1, main injection amount, post injection amount, and exhaust gas flow rate being recirculated by the high-pressure EGR path 6 or low-pressure EGR path 10 is adjusted so that the exhaust air/fuel ratio matches the exhaust air/fuel ratio target value determined.

In addition, the NOx purification catalyst reduction control unit 41 selectively executes, depending on the operating state of the engine 1, reduction control according to rich combustion to make the exhaust gas flowing into the NOx purification catalyst 31 into a reducing atmosphere by increasing the main injection amount, and reduction control according to post rich to make the exhaust gas flowing into the NOx purification catalyst 31 into a reducing atmosphere by performing post injection. More specifically, by referring to an operating state determination map established based on a predetermined experiment and in which the revolution speed of the engine 1 and the fuel injection amount stored in the ECU 40 in advance are set as parameters, it is determined if it is a high load operating state or a low load operating state based on the revolution speed of the engine 1 and the fuel injection amount, and then execution is performed selectively depending on the operating state thus determined.

The EGR control unit 42 is configured to include a high-pressure EGR control portion 43 that controls the flow rate of exhaust gas being recirculated through the high-pressure EGR path 6, and a low-pressure EGR control portion 44 that controls the flow rate of exhaust gas being recirculated through the low-pressure EGR path 10.

The high-pressure EGR control portion 43 controls the aperture of the high-pressure EGR valve 11 to control the flow rate of the exhaust gas being recirculated through the high-pressure EGR path 6. In addition, while recirculation control of the exhaust gas is being performed by this high-pressure EGR control portion 43, the low-pressure EGR valve 12 is basically closed.

The low-pressure EGR control portion 44 controls the aperture of the low-pressure EGR valve 12 to control the flow rate of the exhaust gas being recirculated through the low-pressure EGR path 10. In addition, while recirculation control of the exhaust gas is being performed by this low-pressure EGR control portion 44, the high-pressure EGR valve 11 is basically closed.

In addition to this, the EGR control unit 42 includes an EGR switching portion 45 that executes EGR switch processing to selectively switch between recirculation control of the exhaust gas by the high-pressure EGR control portion 43 and the recirculation control of the exhaust gas by the low-pressure EGR control portion 44.

The EGR switching portion 45 predicts the occurrence of surging of the turbocharger 8 during reduction control execution by the NOx purification catalyst reduction control unit 41, and executes switching between recirculation control of the exhaust gas by the high-pressure EGR control portion 43 and recirculation control of the exhaust gas by the low-pressure EGR control portion 44 according to the prediction results thereof. In a case of surging not occurring in the turbocharger 8 being predicted thereby, switching to the low-pressure EGR path 10 is executed by the high-pressure EGR valve 11 being closed and the low-pressure EGR valve 12 being opened. In addition, in a case of surging occurring in the turbocharger 8 being predicted, switching to the high-pressure EGR path 6 is executed by the low-pressure EGR valve 12 being closed and the high-pressure EGR valve 11 being opened.

The occurrence of surging in the turbocharger 8 is predicted based on the intake air amount detected by the air flow meter 21 and a compressor pressure ratio calculated from the outputs of the upstream pressure sensor 23 and the downstream pressure sensor 24, by referring to a surging region determination map established according to a predetermined experiment and setting the intake air amount and compressor pressure ratio stored in the ECU 40 in advance as parameters.

FIG. 2 is a flowchart showing a sequence of EGR switch processing by the ECU 40. As shown in FIG. 2, the EGR switch processing by the ECU 40 makes selection between high-pressure EGR control and low-pressure EGR control possible depending on the determination results of surging occurrence prediction for the turbocharger 8 during enrichment execution accompanying throttling and the like (i.e. during reduction control execution). This EGR switch processing is repeatedly executed at a predetermined interval by the aforementioned EGR switching portion 45.

In Step S1, it is determined whether to execute enrichment; in a case of this determined being NO, Step S2 is advanced to, and in a case of being YES, Step S3 is advanced to. More specifically, the NOx trapped amount of the NOx purification catalyst 31 is estimated based on the intake air amount, fuel injection amount and the like, and enrichment is executed in a case of the NOx trapped amount thus estimated being at least a predetermined judgment value.

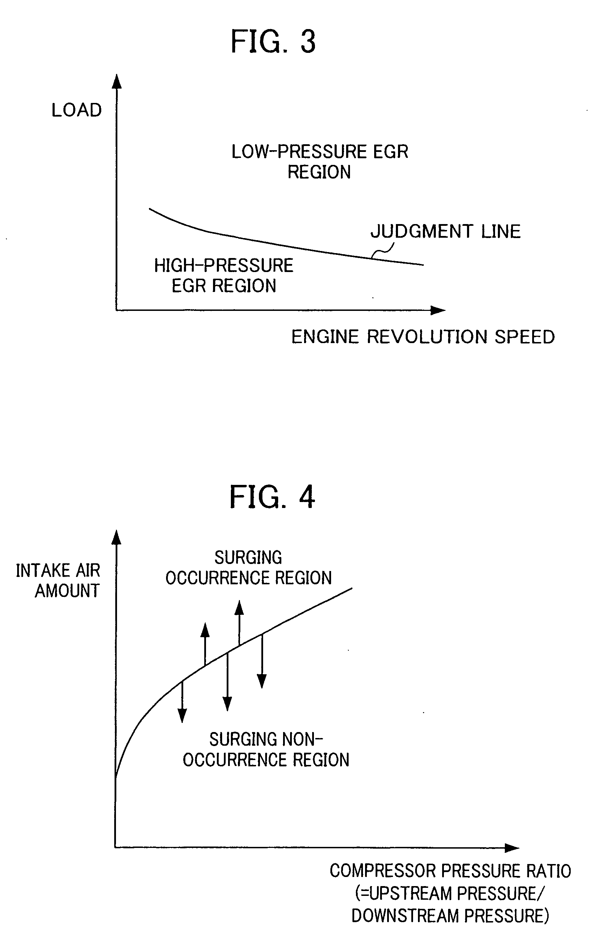

In Step S2, it is determined whether the current operating state is the high-pressure EGR range during enrichment non-execution. More specifically, whether or not this operating state is the high-pressure EGR region is determined based on a control map such as that shown in FIG. 3. In a case of this determination being YES, Step S5 is advanced to, and high-pressure EGR control, i.e. recirculation control of the exhaust gas through the high-pressure EGR path 6, is selected. In addition, in a case of this determination being NO, Step S6 is advanced to, and low-pressure EGR control, i.e. recirculation control of the exhaust gas through the low-pressure EGR path 10, is selected.

FIG. 3 is a graph showing an EGR region determination map, and is a graph showing an example of the control map that is referred to in the aforementioned Step S2. This EGR region determination map is set based on a predetermined experiment and is stored in the ECU 40.

As shown in FIG. 3, with the engine revolution speed and load set as parameters expressing the operating state, the operating state is divided into a low-pressure EGR region in which low-pressure EGR control is suited and a high-pressure EGR region in which high-pressure EGR control is suited. According to this control map, basically, high-pressure EGR control is selected in a case of the load being low, and low-pressure EGR control is selected in a case of the load being high. In addition, the judgment line dividing the high-pressure EGR region and the low-pressure EGR region becomes lower as the engine revolution speed increases. In other words, when the engine revolution speed increases, low-pressure EGR control is selected even at low load.

In Step S3, the occurrence of surging of the turbocharger 8 is predicted based on the intake air amount, and a ratio of the compressor upstream-side pressure to the compressor downstream-side pressure (hereinafter referred to as compressor pressure ratio), and then Step S4 is advanced to. More specifically, it is determined whether or not being in a surging occurrence region based on a control map such as that shown in FIG. 4. In a case of this determination being YES, Step S6 is advanced to, and low-pressure EGR control, i.e. recirculation control of the exhaust gas through the low-pressure EGR path 10, is selected. In addition, in a case of this determination being NO, Step S5 is advanced to, and high-pressure EGR control, i.e. recirculation control of the exhaust gas through the high-pressure EGR path 6, is selected.

FIG. 4 is a graph showing a surging region determination map, and is a graph showing the control map referenced in the aforementioned Step S3. This surging region determination map is set based on a predetermined experiment and stored in the ECU 40.

As shown in FIG. 4, the surging region determination map is divided into a surging occurrence region and a non-occurrence region with the intake air amount and the compressor pressure ratio as parameters.

In Step S5, high-pressure EGR control, i.e. recirculation control of the exhaust gas through the high-pressure EGR path 6, is selected, and the EGR switch processing by the ECU 40 ends.

In Step S6, low-pressure EGR control, i.e. recirculation control of the exhaust gas through the low-pressure EGR path 10, is selected, and the EGR switch processing by the ECU 40 ends.

As explained in detail in the foregoing, according to the present embodiment, during reduction control execution to control the exhaust gas flowing into the NOx purification catalyst 31 to a reducing atmosphere (i.e. enriching the exhaust air/fuel ratio), selecting between the recirculation control of the exhaust gas by way of the high-pressure EGR control portion 43 and recirculation control of the exhaust gas by way of the low-pressure EGR control portion 44 is executed based on the surging occurrence prediction results for the turbocharger 8. More specifically, in a case of surging occurring in the turbocharger 8 being predicted during reduction control execution, recirculation control of the exhaust gas by way of the low-pressure EGR control portion 44 is selected, and in a case of surging not occurring in the turbocharger 8 being predicted, recirculation control of the exhaust gas by way of the high-pressure EGR control portion 43 is selected.

As explained above, upon executing reduction control for NOx purification, even in a case of using either method among rich combustion and post rich, a decrease in the intake air amount by way of throttling or the like is required. In addition, if recirculation control of the exhaust gas by way of the high-pressure EGR control portion 43 is selected during reduction control execution accompanying throttling and the like, a large difference will arise between the pressure inside the intake plumbing 2 further upstream than the compressor 82 and the pressure inside the intake plumbing 2 further downstream than the compressor 82, and surging will occur in the turbocharger 8. In this regard, according to the present invention, the occurrence of surging in the turbocharger 8 can be avoided during execution of reduction control by selecting recirculation control of the exhaust gas by way of the low-pressure EGR control portion 44 in a case of the occurrence of surging being predicted.

In addition, since the exhaust gas flowing inside the EGR path is relatively low temperature in low-pressure EGR, there has been a problem in that HC tends to adhere inside the EGR path; however, according to the present invention, since recirculation control of the exhaust gas by way of the low-pressure EGR control portion 44 is selected limiting to a case in which the occurrence of surging is predicted, the adherence of HC inside of the low-pressure EGR path 10 can be suppressed.

Furthermore, as a result of lower temperature exhaust gas being recirculated in low-pressure EGR and being supplied to combustion, there has been a problem in that the temperature of the exhaust gas emitted from the engine 1 declines, and thus the activity of the downstream NOx purification catalyst 31 declines; however, according to the present invention, since recirculation control of the exhaust gas by way of the low-pressure EGR control portion 44 is selected limiting to a case of the occurrence of surging being predicted, a decline in the activity of the NOx purification catalyst 31 due to a decline in the exhaust temperature can be suppressed.

In addition, according to the present embodiment, the occurrence of surging is predicted based on the intake air amount and the compressor pressure ratio.

The cause of surging is a large pressure differential arising between the compressor upstream pressure and the compressor downstream pressure under conditions of at least a predetermined intake air amount; however, according to the present embodiment, since surging is predicted based on this intake air amount and compressor pressure ratio, surging can be predicted more accurately.

As a result, according to the present embodiment, recirculation control of the exhaust gas by way of the low-pressure EGR control portion 44 can be selected at a more appropriate timing during the execution of reduction control, and thus the occurrence of surging in the turbocharger 8 can be more reliably avoided. In addition, the adherence of HC in the low-pressure EGR path 10 can be further suppressed, and a decline in the activity of the NOx purification catalyst 31 due to a decline in the exhaust temperature can be further suppressed.

In the present embodiment, the ECU 40 configures a portion of the first EGR control means, a portion of the second EGR control means, the EGR switching means, the reduction control means, and the prediction means. More specifically, the high-pressure EGR control portion 43 of the ECU 40 and the high-pressure EGR valve 11 correspond to the first EGR control means; the low-pressure control portion 44 of the ECU 40 and the low-pressure EGR valve 12 correspond to the second EGR control means; the EGR switching portion 45 of the ECU 40 corresponds to the EGR switching means; and the NOx purification catalyst reduction control unit 41 of the ECU 40 corresponds to the reduction control means. In addition, the means related to the execution of Step S3 in FIG. 2 correspond to the prediction means.

It should be noted that the present invention is not to be limited to the above-mentioned embodiment, and modifications, improvements and the like within a scope that can achieve the object of the present invention are included in the present invention. For example, the EGR switch processing according to the present invention is not only for a case of removing NOx trapped in a NOx purification catalyst, but can also be applied to a case of removing sulfur trapped in a NOx purification catalyst.

## Claims

1. An exhaust purifying device for an internal combustion engine (1) equipped with a turbocharger (8) that drives a compressor (82) provided in an intake path (2,3) of the internal combustion engine (1) by way of rotation of a turbine (81) provided in an exhaust path (4) of the internal combustion engine (1), the device comprising:
a first EGR path (6) that recirculates a portion of exhaust gas upstream of the turbine (81) into the intake path (2,3);
a first EGR control means (11,43) for controlling a flow rate of exhaust gas being recirculated through the first EGR path (6);
a second EGR path (10) that recirculates a portion of exhaust gas downstream of the turbine (81) into the intake path (2,3);
a second EGR control means (12,44) for controlling a flow rate of exhaust gas being recirculated through the second EGR path (10) ;
a NOx purification catalyst (31) that is provided inside of the exhaust path (4), traps NOx under an oxidizing atmosphere, and purifies NOx under a reducing atmosphere; and
a reduction control means (41) for executing reduction control to make exhaust gas flowing into the NOx purification catalyst (31) into a reducing atmosphere at a predetermined time; **characterized by**
a prediction means (40) for predicting occurrence of surging in the turbocharger (8) ; and
an EGR switching means (45) for selecting recirculation control of exhaust gas by way of the first EGR control means (11,43) in a case of surging not occurring in the turbocharger (8) being predicted by the prediction means (40), and selecting recirculation control of exhaust gas by way of the second EGR control means (12,44) in a case of surging occurring in the turbocharger (8) being predicted by the prediction means (40), during execution of the reduction control.

2. An exhaust purifying device for an internal combustion engine (1) according to claim 1, further comprising:
an intake air amount detection means (21) for detecting an intake air amount of the internal combustion engine (1) ;
an upstream-side pressure detection means (23) for detecting pressure inside the intake path (2,3) further upstream than the compressor (82); and
a downstream-side pressure detection means (24) for detecting pressure inside the intake path (2,3) further downstream than the compressor (82),
wherein the prediction means (40) predicts an occurrence of surging in the turbocharger (8) based on the intake air amount detected by the intake air amount detection means (21), and a ratio of upstream-side pressure detected by the upstream-side pressure detection means (23) to downstream-side pressure detected by the downstream-side pressure detection means (24).

3. An exhaust purifying method for an internal combustion engine (1) including:
a turbocharger (8) that drives a compressor (82) provided in an intake path (2,3) of the internal combustion engine (1) by way of rotation of a turbine (81) provided in an exhaust path (4) of the internal combustion engine (1) ;
a first EGR path (6) that recirculates a portion of exhaust gas upstream of the turbine (81) into the intake path (2, 3) ;
a first EGR control means (11,43) for controlling a flow rate of exhaust gas being recirculated through the first EGR path (6) ;
a second EGR path (10) that recirculates a portion of exhaust gas downstream of the turbine (81) into the intake path (2,3);
a second EGR control means (12,44) for controlling a flow rate of exhaust gas being recirculated through the second EGR path (10) ; and
a NOx purification catalyst (31) that is provided inside of the exhaust path (4), traps NOx under an oxidizing atmosphere, and purifies NOx under a reducing atmosphere,
the method comprising:
a reduction control step of executing reduction control to make exhaust gas flowing into the NOx purification catalyst (31) into a reducing atmosphere at a predetermined timing; **characterized by**
a prediction step of predicting occurrence of surging in the turbocharger (8) ; and
an EGR switching step of, during execution of the reduction control, selecting recirculation control of exhaust gas by way of the first EGR control means (11,43) in a case of surging not occurring in the turbocharger (8) being predicted in the prediction step, and selecting recirculation control of exhaust gas by way of the second EGR control means (12,44) in a case of surging occurring in the turbocharger (8) being predicted in the prediction step.

## Patentansprüche

1. Abgasreinigungseinrichtung für einen Verbrennungsmotor (1), welcher mit einem Abgasturbolader (8) ausgestattet ist, welcher einen in einem Einlassweg (2, 3) des Verbrennungsmotors (1) vorgesehenen Verdichter (82) durch eine Drehung einer in einem Abgasweg (4) des Verbrennungsmotors (1) vorgesehenen Turbine (81) antreibt, wobei die Einrichtung umfasst:
einen ersten EGR-Weg (6), welcher einen Teil von Abgas stromaufwärts von der Turbine (81) in, den Einlassweg (2, 3) rezirkuliert;
ein erstes EGR-Steuer-/Regelmittel (11, 43), um eine Strömungsrate von Abgas zu steuern/regeln, welches durch den ersten EGR-Weg (6) rezirkuliert wird;
einen zweiten EGR-Weg (10), welcher einen Teil von Abgas stromabwärts von der Turbine (81) in den Einlasweg (2, 3) rezirkuliert;
ein zweites EGR-Steuer-/Regelmittel (12, 44), um eine Strömungsrate von Abgas zu steuern/regeln, welches durch den zweiten EGR-Weg (10) rezirkuliert wird;
einen NOx-Reinigungskatalysator (31), welcher im Inneren des Abgaswegs (4) vorgesehen ist, NOx unter einer oxidierenden Atmosphäre einfängt und NOx unter einer reduzierenden Atmosphäre reinigt; und
ein Reduzierungsteuer-/regelmittel (41), um eine Reduzierungssteuerung/-regelung durchzuführen, um Abgas in den NOx-Reinigungskatalysator (31) strömen zu lassen, in eine reduzierende Atmosphäre, zu einer vorbestimmten Zeit;
**gekennzeichnet durch**
ein Vorhersagemittel (40), um ein Auftreten eines Druckanstiegs in dem Abgasturbolader (8) vorherzusagen; und
ein EGR-Schaltmittel (45), um eine Rezirkulationssteuerung/-regelung von Abgas **durch** das erste EGR-Steuer-/Regelmittel (11, 43) in einem Fall auszuwählen, in welchem von dem Vorhersagemittel (40) vorhergesagt wird, dass kein Druckanstieg in dem Abgasturbolader (8) auftritt, und eine Rezirkulationssteuerung/-regelung von Abgas **durch** das zweite EGR-Steuer-/Regelmittel (12, 44) in einem Fall auszuwählen, in welchem von dem Vorhersagemittel (40) vorhergesagt wird, dass ein Druckanstieg in dem Abgasturbolader (8) auftritt, während der Ausführung der Reduzierungssteuerung/- regelung.

2. Abgasreinigungseinrichtung für einen Verbrennungsmotor (1) nach Anspruch 1, ferner umfassend:
ein Einlassluftmengenerfassungsmittel (21), um eine Einlassluftmenge von dem Verbrennungsmotor (1) zu erfassen;
ein stromaufwärtsseitiges Druckerfassungsmittel (23), um einen Druck im Inneren des Einlasswegs (2, 3) weiter stromaufwärts als der Verdichter (82) zu erfassen; und
ein stromabwärtsseitiges Druckerfassungsmittel (24), um einen Druck im Inneren des Einlasswegs (2, 3) weiter stromabwärts als der Verdichter (82) zu erfassen,
wobei das Vorhersagemittel (40) ein Auftreten eines Druckanstiegs in dem Abgasturbolader (8) vorhersagt basierend auf der Einlassluftmenge, welche von dem Einlassluftmengenerfassungsmittel (21) erfasst wird, und einem Verhältnis von einem von dem stromaufwärtsseitigen Druckerfassungsmittel (23) erfassten stromaufwärtsseitigen Druck zu einem von dem stromabwärtsseitigen Druckerfassungsmittel (24) erfassten stromabwärtsseitigen Druck.

3. Abgasreinigungsverfahren für einen Verbrennungsmotor (1), umfassend:
einen Abgasturbolader (8), welcher einen in einem Einlassweg (2, 3) des Verbrennungsmotors (1) vorgesehenen Verdichter (82) durch eine Drehung einer in einem Abgasweg (4) des Verbrennungsmotors (1) vorgesehenen Turbine (81) antreibt;
einen ersten EGR-Weg (6), welcher einen Teil von Abgas stromaufwärts von der Turbine (81) in den Einlassweg (2, 3) rezirkuliert;
ein erstes EGR-Steuer-/Regelmittel (11, 43), um eine Strömungsrate von durch den ersten EGR-Weg (6) rezirkuliertem Abgas zu steuern/regeln;
einen zweiten EGR-Weg (10), welcher einen Teil von Abgas stromabwärts von der Turbine (81) in den Einlassweg (2, 3) rezirkuliert;
ein zweites EGR-Steuer-/Regelmittel (12, 44), um eine Strömungsrate von durch den zweiten EGR-Weg (10) rezirkuliertem Abgas zu steuern/regeln; und
einen NOx-Reinigungskatalysator (31), welcher im Inneren des Abgaswegs (4) vorgesehen ist, NOx unter einer oxidierenden Atmosphäre fängt und NOx unter einer reduzierenden Atmosphäre reinigt,
wobei das Verfahren umfasst:
einen Reduzierungssteuer-/regelschritt, in welchem eine Reduzierungssteuerung/-regelung durchgeführt wird, um Abgas in den NOx-Reinigungskatalysator (31) strömen zu lassen, in eine reduzierende Atmosphäre, mit einer vorbestimmten Zeiteinstellung;
**gekennzeichnet durch**
einen Vorhersageschritt, um ein Auftreten eines Druckanstiegs in dem Abgasturbolader (8) vorherzusagen; und
einen EGR-Schaltschritt, in welchem während der Ausführung der Reduzierungssteuerung/-regelung eine Rezirkulationssteuerung/- regelung von Abgas **durch** das erste EGR-Steuer-/Regelmittel (11, 43) in einem Fall ausgewählt wird, in welchem in dem Vorhersageschritt vorhergesagt wird, dass kein Druckanstieg in dem Abgasturbolader (8) auftritt, und eine Rezirkulationssteuerung/-regelung von Abgas **durch** das zweite EGR-Steuer-/Regelmittel (12, 44) in einem Fall ausgewählt wird, in welchem in dem Vorhersageschritt vorhergesagt wird, dass ein Druckanstieg in dem Abgasturbolader (8) auftritt.

## Revendications

1. Dispositif de purification d'échappement pour un moteur à combustion interne (1) équipé d'un turbocompresseur (8) qui entraîne un compresseur (82) agencé dans un chemin d'admission (2, 3) du moteur à combustion interne (1) au moyen de la rotation d'une turbine (81) agencée dans un chemin d'échappement (4) du moteur à combustion interne (1), le dispositif comprenant :
un premier chemin de recirculation des gaz d'échappement (RGE) (6) qui remet en recirculation une partie du gaz d'échappement en amont de la turbine (81) dans le chemin d'entrée (2, 3) ;
un premier moyen de commande de RGE (11, 43) permettant de commander un débit du gaz d'échappement remis en circulation à travers le premier chemin de RGE (6) ;
un second chemin de RGE (10) qui remet en circulation une partie du gaz d'échappement en aval de la turbine (81) dans le chemin d'entrée (2, 3) ;
un second moyen de commande de RGE (12, 44) permettant de commander un débit du gaz d'échappement remis en circulation à travers le second chemin de RGE (10) ;
un catalyseur de purification de NOx (31) qui est agencé à l'intérieur du chemin d'échappement (4), piège le NOx dans une atmosphère oxydante, et purifie le NOx dans une atmosphère réductrice ; et
un moyen de commande de réduction (41) permettant de réaliser la commande de réduction afin que le gaz d'échappement s'écoule dans le catalyseur de purification de NOx (31) dans une atmosphère réductrice à un moment prédéterminé ; **caractérisé par**
un moyen de prévision (40) permettant de prévoir l'occurrence d'un pompage dans le turbocompresseur (8) ; et
un moyen de commutation de RGE (45) permettant de sélectionner la commande de recirculation du gaz d'échappement au moyen du premier moyen de commande de RGE (11, 43) dans un cas où le moyen de prévision (40) prévoit que le pompage n'a pas lieu dans le turbocompresseur (8), et de sélectionner une commande de recirculation du gaz d'échappement au moyen du second moyen de commande de RGE (12, 44) dans un cas où le moyen de prévision (40) prévoit que le pompage a lieu dans le turbocompresseur (8) pendant que la commande de réduction est réalisée.

2. Dispositif de purification d'échappement pour un moteur à combustion interne (1) selon la revendication 1, comprenant en outre :
un moyen de détection de quantité d'air d'admission (21) permettant de détecter une quantité d'air d'admission du moteur à combustion interne (1) ;
un moyen de détection de la pression côté amont (23) permettant de détecter la pression à l'intérieur du chemin d'admission (2, 3) plus en amont que le compresseur (82), et
un moyen de détection de la pression côté aval (24) permettant de détecter la pression à l'intérieur du chemin d'admission (2, 3) plus en aval que le compresseur (82),
dans lequel le moyen de prévision (40) prévoit une occurrence d'un pompage dans le turbocompresseur (8) d'après la quantité d'air d'admission détectée par le moyen de détection de quantité d'air d'admission (21), et un rapport entre la pression côté amont détectée par le moyen de détection de pression côté amont (23) et la pression côté aval détectée par le moyen de détection de pression côté aval (24).

3. Procédé de purification d'échappement pour un moteur à combustion interne (1) comprenant :
un turbocompresseur (8) qui entraîne un compresseur (82) agencé dans un chemin d'admission (2, 3) du moteur à combustion interne (1) au moyen de la rotation d'une turbine (81) agencée dans un chemin d'échappement (4) du moteur à combustion interne (1) ;
un premier chemin de RGE (6) qui remet en circulation une partie du gaz d'échappement en amont de la turbine (81) dans le chemin d'admission (2, 3) ;
un premier moyen de commande de RGE (11, 43) pour commander un débit du gaz d'échappement remis en circulation à travers le premier chemin de RGE (6) ;
un second chemin de RGE (10) qui remet en circulation une partie du gaz d'échappement en aval de la turbine (81) dans le chemin d'admission (2, 3) ;
un second moyen de commande de RGE (12, 44) permettant de commander un débit du gaz d'échappement remis en circulation à travers le second chemin de RGE (10) ; et
un catalyseur de purification de NOx (31) qui est agencé à l'intérieur du chemin d'échappement (4), piège le NOx sous une atmosphère oxydante, et purifie le NOx sous une atmosphère réductrice,
le procédé comprenant :
une étape de commande de réduction consistant à réaliser la commande de réduction afin que le gaz d'échappement s'écoule dans le catalyseur de purification de NOx (31) dans une atmosphère réductrice à un moment prédéterminé ; **caractérisé par**
une étape de prévision consistant à prévoir une occurrence d'un pompage dans le turbocompresseur (8) ; et
une étape de commutation de RGE consistant, pendant la réalisation de la commande de réduction, à sélectionner la commande de recirculation du gaz d'échappement au moyen du premier moyen de commande de RGE (11, 43) dans un cas où l'étape de prévision prévoit que le pompage n' a pas lieu dans le turbocompresseur (8), et à sélectionner la commande de recirculation du gaz d'échappement au moyen du second moyen de commande de RGE (12, 44) dans un cas où l'étape de prévision prévoit que le pompage a lieu dans le turbocompresseur (8).
